# FASCICULE DE BREVET EUROPEEN

(11) **EP 0 930 003 B1**
(45) Date de publication et mention de la délivrance du brevet: **26.03.2003**
(21) Numéro de dépôt: 99460005.4
(22) Date de dépôt: 19.01.1999
(51) Int. Cl.: A01K 1/02

(54) **Case de maternité destinée à recevoir une femelle et ses petits et un ou plusieurs tapis de sol destinés à équiper ladite case**
Abferkelbucht für ein weibliches Tier und seine Jungtiere, sowie ein oder mehrere Bodenmatten für eine solche Bucht
Farrowing crate for a female and its children, and one or several floor mats for such a crate

(30) Priorité: 19.01.1998 FR 9800682
(43) Date de publication de la demande: 21.07.1999
(73) Titulaire: GALVELPOR SA, 29419 Landerneau Cedex (FR)
(72) Inventeur: Holden, Graham, 29419 Landerneau Cedex (FR); Guedes, Yves, 29419 Landerneau Cedex (FR); Loaec, Jean-Pierre, 29419 Landerneau Cedex (FR)
(74) Mandataire: Maillet, Alain

(56) Documents cités:
- WO-A-96/10329
- FR-A- 2 559 999
- US-A- 4 294 195
- US-A- 4 348 986
- Dépliant "GALVERPOR" Abfertelbucht. COMPACT-MIX Utrecht 23 septembre 1992. Voir en particulier, 2ème page, C)Frekelnest. XP002078415
- WENNER, HEINZ-LOTHAR ET AL: "Die Landwirtschaft, Bd. 3: Landtechnik, Bauwesen", 1986, VERB. D. LANDWIRTSCHAFTSBERATER IN BAYERN, MÜNCHEN

## Description

La présente invention concerne une case de maternité destinée à recevoir une femelle et ses petits, et un ou plusieurs tapis de sol destinés à équiper ladite case. L'invention s'applique notamment à une case de maternité destinée à recevoir une truie et ses porcelets.

Les cases de maternité connues pour une truie et ses porcelets comportent usuellement un plancher destiné à recevoir la truie et, de part et d'autre de celui-ci, un plancher destiné à recevoir les porcelets.

D'une manière générale, le plancher pour porcelets est constitué d'un caillebotis en matériau plastique, alors que le plancher pour truie est constitué d'un caillebotis métallique.

Ces caillebotis sont prévus pour éviter une accumulation des déjections porcines à la surface du plancher de la case par l'intermédiaire des lumières qu'ils comportent, les déjections s'écoulant par lesdites lumières et étant classiquement récupérées dans un bac ou une fosse à lisier.

Cette différence de matériau entre lesdits caillebotis est destinée à inciter les porcelets à demeurer sur le caillebotis qui leur est réservé, du fait de la sensation de confort relatif que leur procure le contact d'un matériau plastique, à la différence d'un matériau métallique.

De plus, le plancher pour porcelets comporte d'ordinaire une zone chauffée, connue sous le nom de "nid à porcelets", laquelle est par exemple constituée d'un tapis prévu pour recevoir les porcelets nouveaux-nés qui ont un besoin important de chaleur pour survivre.
Un tel tapis est dans la pratique, disposé à recouvrement sur le caillebotis du plancher pour porcelets.

Ledit caillebotis en plastique est usuellement prévu en contrebas de quelques centimètres par rapport au plancher de truie, de sorte que les tétines de la truie soient bien dégagées lorsque celle-ci repose sur le flanc pour le bon allaitement des porcelets.

Ces différences de matériaux et de hauteur entre les caillebotis de truie et de porcelets permettent de dissuader les porcelets de s'aventurer sur le plancher de truie où ils risqueraient d'être écrasés, et de minimiser ainsi les risques d'accidents.

Un inconvénient majeur des cases de maternité connues réside notamment dans le facteur de stress et dans les risques de blessures aux pattes que peuvent engendrer pour les porcelets nouveaux-nés les caillebotis du type précité, lorsqu'ils doivent s'y déplacer pour atteindre les tétines de la truie.

Le but de la présente invention est de proposer une case de maternité destinée à recevoir une femelle et ses petits, notamment une truie et ses porcelets, ladite case comportant un plancher dont une première partie et une seconde partie sont respectivement prévues pour recevoir ladite femelle et lesdits petits, ladite seconde partie comportant au moins une zone chauffée destinée à recevoir les porcelets nouveaux-nés, et un ou plusieurs tapis de sol destinés à équiper ladite case, qui remédient à l'inconvénient précité.

A cet effet, une case de maternité selon l'invention est telle que ledit plancher comporte au moins un tapis reliant ladite zone chauffée à ladite première partie de plancher.

Selon une autre caractéristique de l'invention, ledit ou chaque tapis est contigü à un bord de ladite première partie de plancher qui est prévu pour l'allaitement desdits petits par ladite femelle.

Selon une autre caractéristique de l'invention, ladite case est du type où ladite première partie de plancher s'étend pratiquement d'une extrémité avant à une extrémité arrière de ladite case, et où ladite seconde partie de plancher s'étend de part et d'autre de ladite première partie et comporte au moins une zone de type caillebotis pour l'évacuation des déjections, et ladite case est telle que ladite ou l'une au moins desdites zones pour l'évacuation des déjections est prévue du côté de ladite première partie qui ne comporte pas ladite ou chaque zone chauffée.

Selon une autre caractéristique de l'invention, ladite zone pour l'évacuation des déjections est prévue contiguë à une paroi du type mur ou cloison, à l'emplacement d'un bord latéral de ladite case.

Selon une autre caractéristique de l'invention, ladite zone pour l'évacuation des déjections est prévue sensiblement à l'opposé de ladite ou chaque zone chauffée.

Selon une autre caractéristique de l'invention, ladite zone pour l'évacuation des déjections présente un périmètre sensiblement rectangulaire et une forme allongée.

Selon une autre caractéristique de l'invention, ladite case est du type où ladite seconde partie de plancher est prévue globalement en contrebas de ladite première partie de plancher, et ladite case est telle que ledit ou chaque tapis comporte une zone qui fait saillie sur sa surface externe et qui est prévue pour être contiguë audit bord d'allaitement de ladite première partie.

Selon une autre caractéristique de l'invention, ladite ou chaque zone saillante est délimitée globalement, en projection plane sur la surface du tapis correspondant, par un périmètre de forme linéaire dont les deux extrémités sont prévues contiguës audit bord d'allaitement.

Selon une autre caractéristique de l'invention, lladite ou chaque zone saillante présente, dans un plan de coupe transversal qui est perpendiculaire audit bord d'allaitement et à partir dudit périmètre de forme linéaire, une première portion comprenant des protubérances de forme allongée puis d'une bande pourvue de moyens antidérapants situé en contre bas dudit gisoir de la truie.

Selon une autre caractéristique de l'invention, l'épaisseur dudit tapis au niveau de ladite seconde portion est prévue pour que celle-ci soit sensiblement à la même hauteur que ladite première partie de plancher.

Selon une autre caractéristique de l'invention, ladite troisième portion présente une surface anti-dérapante.

Selon une autre caractéristique de l'invention, ledit ou chaque tapis comporte une paire de zones d'épaisseur minimale et de forme allongée, qui sont respectivement prévues pour se trouver en regard des pattes avant et arrière de la truie lors de chaque allaitement.

Selon une autre caractéristique de l'invention, ledit plancher comporte des moyens pour canaliser les petits nouveaux-nés en direction de ladite ou chaque zone chauffée.

Selon une autre caractéristique de l'invention, lesdits moyens comportent un couloir formé sur ledit ou chaque tapis et qui est prévu pour relier l'arrière de ladite première partie de plancher à ladite ou chaque zone chauffée.

Selon une autre caractéristique de l'invention, ledit ou chaque couloir est délimité transversalement par des rebords formés par des plis faisant saillie sur la face externe dudit tapis.

Selon une autre caractéristique de l'invention, ledit ou chaque couloir présente sensiblement une forme de "L", dont la base est prévue au moins à l'arrière de ladite première partie de plancher et dont la tige est dirigée vers ladite zone chauffée.

Selon une autre caractéristique de l'invention, ledit ou chaque tapis est prévu pour s'étendre sur la totalité de ladite seconde partie de plancher.

Selon une autre caractéristique de l'invention, ledit ou chaque tapis est monté d'une manière amovible dans ladite case.

Un ou des tapis de sol selon l'invention sont destinés à constituer un revêtement d'une partie de plancher de case de maternité pour des animaux nouveaux-nés, notamment des porcelets, et ils sont tels que ledit ou l'un desdits tapis comporte un premier évidement prévu pour épouser sensiblement le contour d'une zone chauffée réservée auxdits animaux nouveaux-nés, et en ce que ledit ou un autre desdits tapis comporte un second évidement prévu pour laisser libre une zone de caillebotis dudit plancher pour l'évacuation des déjections, un troisième évidement étant formé dans ledit tapis ou entre lesdits tapis, ledit troisième évidement étant prévu entre lesdits premier et second évidements pour épouser le contour d'une autre partie de plancher de ladite case pour la mère desdits animaux nouveaux-nés.

Selon une autre caractéristique de l'invention, ledit second évidement est formé le long d'une partie du périmètre dudit ou du tapis correspondant qui est prévue pour épouser un bord latéral de ladite case.

Selon une autre caractéristique de l'invention, ledit ou chaque tapis comporte une zone qui fait saillie sur sa surface externe et qui est prévue pour être contiguë audit troisième évidement.

Selon une autre caractéristique de l'invention, ladite ou chaque zone saillante est délimitée globalement, en projection plane sur la surface du tapis correspondant, par un périmètre en forme d'arc de courbe dont les deux extrémités sont prévues contiguës audit troisième évidement.

Selon une autre caractéristique de l'invention, ledit arc de courbe présente une courbure orientée vers ledit évidement, par exemple en forme de partie oblongue d'ellipse.

Selon une autre caractéristique de l'invention, ladite ou chaque zone saillante présente, dans un plan de coupe transversal qui est perpendiculaire à la direction longitudinale dudit évidement et à partir dudit périmètre, une première portion pentue vers le haut, une seconde portion sensiblement parallèle à la surface globale du tapis correspondant et constituant le sommet de ladite zone saillante, et une troisième portion dont la pente décroît continûment à partir de ladite seconde portion.

Selon une autre caractéristique de l'invention, l'épaisseur dudit ou de chaque tapis au niveau de ladite seconde portion est prévue maximale pour ledit tapis.

Selon une autre caractéristique de l'invention, ladite troisième portion présente une surface antidérapante.

Selon une autre caractéristique de l'invention, ledit ou chaque tapis comporte une paire de zones d'épaisseur minimale et de forme allongée, qui sont respectivement prévues pour se trouver en regard des pattes avant et arrière de ladite mère lors de chaque allaitement.

Selon une autre caractéristique de l'invention, sur ledit ou celui desdits tapis qui comporte ledit premier évidement sont formés des moyens pour canaliser les animaux nouveaux nés en direction de ladite zone chauffée.

Selon une autre caractéristique de l'invention, lesdits moyens comportent un couloir formé sur ledit ou chaque tapis et qui est prévu pour relier l'arrière de ladite partie de plancher pour la mère à ladite zone chauffée.

Selon une autre caractéristique de l'invention, ledit ou chaque couloir est délimité transversalement par des rebords formés par des plis faisant saillie sur la face externe dudit tapis.

Selon une autre caractéristique de l'invention, ledit couloir présente sensiblement une forme de "L", dont la base est prévue au moins à l'arrière de ladite partie de plancher pour la mère et dont la tige est dirigée vers ladite zone chauffée. Par exemple, la base dudit "L" présente une forme de trapèze rectangle.

Selon un exemple de réalisation avantageux de l'invention, ledit ou chaque tapis est constitué d'un matériau biodégradable ou pouvant être fragmenté par piétinement. Ledit matériau est alors par exemple de l'amidon de céréales, du pop-corn soufflé ou de la tourbe.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en perspective éclatée d'une case de maternité selon l'invention comportant deux tapis de sol selon un exemple préférentiel de réalisation de l'invention, et
la Fig. 2 est une vue en coupe selon le plan II-II de la Fig. 1 d'une partie du plancher de ladite case comportant lesdits tapis de sol.

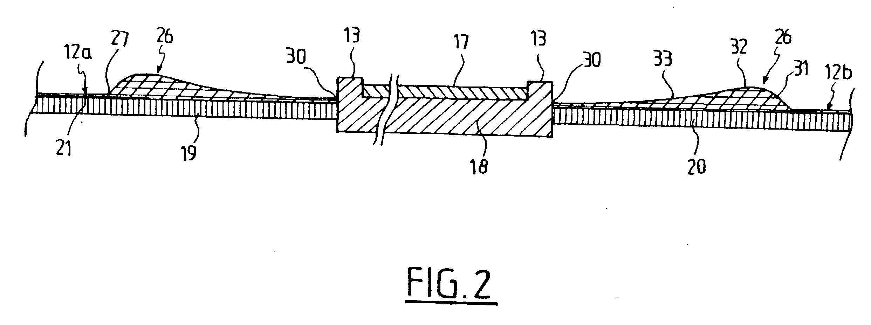

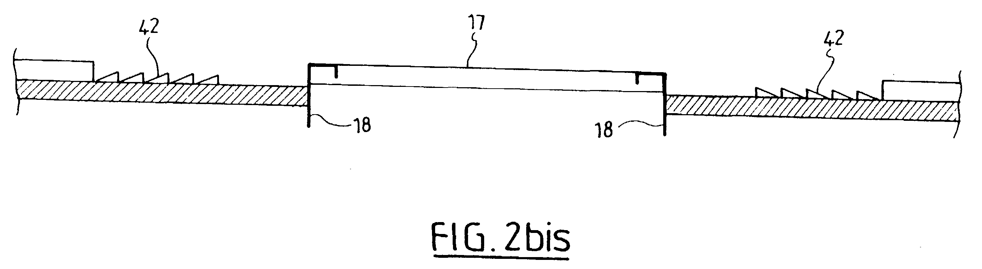

La Fig.2 bis est une vue en coupe d'une variante de la Fig. 2.

Une case de maternité 1 selon l'invention présente par exemple une forme rectangulaire, qui lui confère une extrémité avant 2, une extrémité arrière 3, et des bords latéraux 4 et 5.

Dans cet exemple de réalisation, l'un des bords latéraux 5 est matérialisé par un mur ou une cloison 6, alors que l'autre bord 4 et lesdites extrémités 2 et 3 sont respectivement matérialisés par des éléments de barrière 7, 8 et 9.

La case 1 comporte un plancher 10 qui est destiné à recevoir une truie et un plancher 11 qui est destiné à recevoir des porcelets.

Selon une caractéristique essentielle de l'invention, le plancher pour porcelets 11 comporte au moins un tapis amovible 12a, 12b qui est destiné à être utilisé pendant les premiers jours d'allaitement qui suivent la naissance d'une portée de porcelets, par exemple pendant environ cinq jours.

Le plancher de truie 10 est délimité dans une direction transversale par deux longerons 13 qui sont par exemple parallèles entre eux. Ledit plancher 10 est également délimité, dans une direction longitudinale, par ladite extrémité avant 2 et par un couloir transversal 14 qui s'étend entre les bords latéraux 4 et 5 de la case 1 et qui est contigü à ladite extrémité arrière 3.

Ce couloir transversal 14 est usuellement prévu pour permettre la traversée de la case 1, et il est par exemple constitué d'un caillebotis.

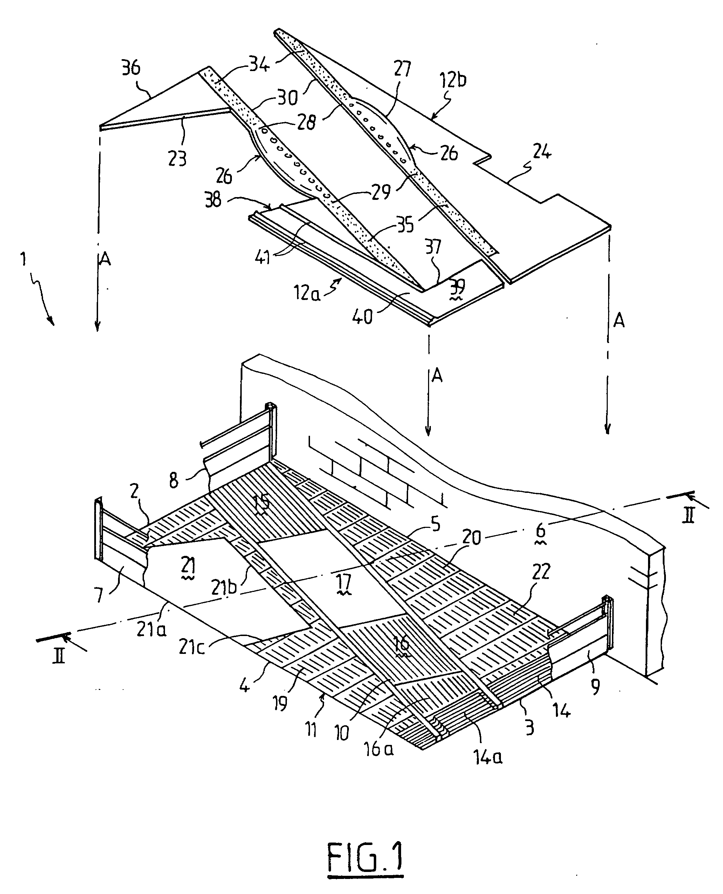

Le plancher de truie 10 comporte par exemple un caillebotis avant 15 qui est monté entre les longerons 13, à partir de l'extrémité avant 2 de la case 1. Dans l'exemple de la Fig. 1, ce plancher 10 comporte également un caillebotis arrière 16 qui est monté entre lesdits longerons 13 et à partir dudit couloir transversal 14.

Le plancher de truie 10 comporte également, entre lesdits longerons 13, un gisoir 17 qui est destiné à recevoir un flanc de la truie et qui relie entre eux lesdits caillebotis avant et arrière 15 et 16.

Comme cela est seulement visible à la Fig. 2, les caillebotis 15 et 16 et le gisoir 17 sont montés sur une structure plane de support 18 pour le plancher 10, de manière que leurs faces supérieures respectives se trouvent légèrement en contrebas des longerons 13.

Dans l'exemple de la Fig. 1, le plancher pour porcelets 11 comporte deux caillebotis 19 et 20 qui sont chacun montés, d'une part, entre l'un des longerons 13 et, d'autre part, entre l'extrémité 2 de la case 1, ledit couloir transversal 14 et ledit bord latéral 4 ou 5 qui sont en regard dudit longeron 13. Cependant, on pourrait prévoir un seul caillebotis 19 ou 20 pour ledit plancher 11, dans le cas où l'un des longerons 13 serait sensiblement confondu avec un bord latéral 4 ou 5 de la case 1.

De préférence, on notera que le plancher de truie 10 présente une structure métallique alors que les caillebotis 19 et 20 du plancher pour porcelets 11 sont constitués d'une matériau plastique plus confortable pour lesdits porcelets, de sorte à les dissuader de séjourner trop longtemps à proximité immédiate de la truie et à minimiser ainsi le risque de leur écrasement.

Le plancher pour porcelets 11 comporte également au moins une zone chauffée 21, généralement appelée "nid" par l'homme du métier, qui est prévue pour recevoir les porcelets immédiatement après leur naissance et dans leurs premiers jours d'existence de sorte à permettre leur survie.

Dans cet exemple de réalisation, le nid 21 est constitué d'un tapis de caoutchouc ou d'une plaque et il est pourvu d'une source de chaleur. Ce nid 21 est disposé sur l'un des caillebotis 19 du plancher 11, sensiblement en regard du gisoir 17 du plancher de truie 10 et plutôt vers l'avant de la case 1. Plus précisément, on voit à la Fig. 1 que l'un des bords 2 la du nid 21 est confondu avec le bord latéral 4 dudit caillebotis 19, alors que son bord 21b qui est adjacent au gisoir 17 est prévu parallèle et en retrait par rapport à ce dernier.

On notera que les caillebotis 19 et 20 du plancher pour porcelets 11 sont de préférence prévus en contrebas des panneaux du plancher de truie 10, d'une hauteur usuelle de 3,5 cm environ. Cependant, la présente invention pourrait également s'appliquer à une case 1 dont les planchers 10 et 11 se situent à la même hauteur.

Le ou les tapis amovibles 12a et 12b sont prévus pour être disposés (voir les flèches A) sur tout ou partie du plancher pour porcelets 11, à l'exception notamment de l'emplacement de celui-ci qui est réservé audit nid 21.

Dans l'exemple de la Fig. 1, sont prévus deux tapis 12a et 12b qui présentent un périmètre globalement rectangulaire correspondant à celui du plancher 11 de la case 1, lorsqu'ils sont juxtaposés en vue de leur mise en place sur ledit plancher 11. L'un des tapis 12a est par exemple prévu pour recouvrir la totalité du caillebotis 19 qui est pourvu dudit nid 21, autour de ce dernier. Plus précisément, le tapis 12a est notamment prévu pour relier ledit nid 21 au plancher de truie 10.

Quant à l'autre tapis 12b, il est par exemple prévu pour recouvrir la totalité de l'autre caillebotis 20, à l'exception d'au moins une zone 22 qui est prévue pour permettre l'évacuation des déjections des jeunes porcelets.

On notera que les tapis 12a et 12b ne sont pas prévus pour recouvrir le plancher de truie 10, dans cet exemple de réalisation.

Une seule zone 22 est prévue dans l'exemple de la Fig. 1, du côté du plancher de truie 10 qui ne comporte pas de nid 21.

Cette zone 22 est par exemple prévue le long d'une partie du périmètre du tapis 12b qui est destinée à se trouver contiguë au bord latéral 5 correspondant de la case 1, matérialisé par la cloison 6, et en regard de la partie arrière du plancher de truie 10, c'est-à-dire sensiblement à l'opposé dudit nid 21, de sorte à procurer une certaine fraîcheur aux jeunes porcelets et les inciter ainsi davantage à y faire leurs déjections. Cette fraîcheur est notamment due à l'éloignement relatif de cette zone 22 vis-à-vis du nid 21, et à la formation de courants d'air le long de ladite cloison 6. Dans l'exemple de la Fig. 1, la zone 22 présente une forme rectangulaire et allongée.

A cet effet, le tapis 12a présente un évidement 23 qui est prévu pour épouser sensiblement le contour du nid à porcelets 20, et le tapis 12b présente un évidement 24 qui est prévu pour épouser le contour de ladite zone de déjections 22

De plus, on voit à la Fig. 1 qu'un troisième évidement est formé entre les deux tapis 12a et 12b, c'est-à-dire entre les deux évidements précités, pour épouser le contour du plancher de truie 10 (dans le cas d'un tapis unique 12a, 12b selon l'invention qui serait prévu à la place des deux tapis 12a et 12b précités, ce troisième évidement pourrait être formé directement dans ledit tapis unique 12a, 12b).

Selon une caractéristique importante de l'invention, l'un des tapis 12a et 12b ou chacun d'entre eux comporte une zone 26 qui fait saillie sur sa surface externe et qui est prévue pour être contiguë à l'un des longerons ou bords 13 du plancher de truie 10. Ce bord 13 matérialise sensiblement l'emplacement des tétines de la truie, lorsque ladite truie repose par son flanc sur le gisoir 17 en vue de l'allaitement.

Dans l'exemple de réalisation de la Fig. 1, chaque tapis 12a, 12b comporte une zone 26 qui est prévue pour recouvrir le caillebotis de porcelets 19, 20, sensiblement en regard et à proximité immédiate du gisoir 17 et d'une partie du cailllebotis arrière 16 du plancher 10.

Chaque zone saillante 26 est délimitée globalement, en projection plane sur la surface du tapis 12a, 12b correspondant, par un périmètre 27 en forme d'arc de courbe dont les deux extrémités 28 et 29 sont contiguës à l'un des rebords longitudinaux 30 dudit tapis 12a, 12b. Comme chaque rebord 30 est destiné à se trouver contigü à l'un des longerons 13, il en résulte que ces extrémités 28 et 29 sont toutes deux destinées à être contiguës à un bord d'allaitement longeron 13.

De préférence, ledit arc de courbe présente une courbure orientée vers ledit rebord 30, et il correspond par exemple sensiblement à une partie oblongue d'ellipse.

Comme cela est visible à la Fig. 1, lesdites extrémités 28 des zones 26 des deux tapis 12a et 12b qui sont destinées à faire face à l'avant du gisoir 17 sont prévues symétriques l'une de l'autre par rapport à l'axe longitudinal dudit gisoir 17, lorsque lesdits tapis 12a et 12b sont appliqués sur le plancher 11. Il en est de même pour les extrémités 29 des deux zones 26 qui sont destinées à se trouver à l'arrière dudit gisoir 17.

Comme on peut le voir à la Fig. 2, chaque zone saillante 26 présente, dans un plan de coupe transversal qui est perpendiculaire audit rebord longitudinal 30 et à partir dudit périmètre 27, une première partie 31 pentue vers le haut, une seconde partie 32 sensiblement parallèle à la surface globale du tapis 12a, 12b correspondant et constituant le sommet de ladite zone 26, et une troisième partie 33 dont la pente décroît continûment à partir de ladite seconde partie 32.

Lesdites seconde et troisième parties 32 et 33 sont prévues pour servir d'appui aux pattes arrières des jeunes porcelets lorsque chaque tapis 12a, 12b est mis en place sur le plancher 11, de sorte à faciliter l'accès desdits porcelets aux tétines respectivement supérieures et inférieures de la truie reposant sur le gisoir 17.

Selon un exemple de réalisation de l'invention, l'épaisseur de chaque tapis 12a, 12b au niveau de ladite seconde partie 32 est prévue sensiblement égale à la différence de hauteur existant entre les caillebotis 19 et 20, c'est-à-dire environ 3,5 cm dans l'exemple précité. Par conséquent, l'épaisseur de chaque seconde partie 32 est prévue pour que celle-ci soit sensiblement à la même hauteur que le plancher de truie 10.

Quant à l'épaisseur moyenne de ladite troisième partie 33, mesurée sensiblement à égale distance de ladite seconde partie 32 et dudit bord longitudinal 30, elle est d'environ 1,5 cm.

De préférence, la troisième partie 33 de chaque zone saillante 26 présente une surface antidérapante pour les porcelets, de sorte que ceux-ci puissent prendre appui sans glisser sur ladite partie 33. Cette surface antidérapante peut être constituée de rugosités ou de petits picots, par exemple.

Selon une autre caractéristique de l'invention qui est visible à la Fig. 1, l'un des tapis 12a et 12b ou chacun d'entre eux comporte une paire de zones 34 et 35 de forme sensiblement rectangulaire, en projection plane sur la surface dudit tapis 12, qui sont respectivement prévues pour se trouver en regard des pattes avant et arrière de la truie lors de la mise en place dudit ou de chaque tapis 12a, 12b sur le plancher 11, lorsque ladite truie repose par son flanc sur le gisoir 17.

Dans l'exemple de la Fig. 1, on voit que l'une des zones 34 de chaque tapis 12a, 12b prolonge ladite zone saillante 26 correspondante jusqu'à l'extrémité 36 dudit tapis 12a, 12b qui est destinée à être confondue avec l'extrémité avant 2 de la case 1. D'une manière analogue, on voit que l'autre zone 35 de chaque tapis 12a, 12b prolonge ladite zone 26 jusqu'à l'extrémité 37 dudit tapis 12a, 12b qui est destinée à épouser le bord avant 14a du couloir transversal 14.

Ces zones 34 et 35 se caractérisent en premier lieu par l'épaisseur minimale qu'elles présentent, laquelle est prévue pour que la différence de hauteur maximale (3,5 cm dans l'exemple précité) entre le plancher de truie 10 et le plancher pour porcelets 11 soit pratiquement maintenue en lesdites zones 34 et 35. Ces dernières se caractérisent en second lieu par la structure et/ou la forme de leur surface externe, lesquelles sont prévues pour procurer une sensation de contact désagréable aux jeunes porcelets venant y prendre appui pendant la période d'allaitement.

Il résulte de ces deux caractéristiques que le risque d'écrasement des porcelets par les pattes de la truie est encore minimisé, du fait que ces zones 34 et 35 dissuadent les porcelets de s'y attarder.

Selon une autre caractéristique de l'invention, le tapis 12a destiné à épouser le contour du nid 21 comporte des moyens 38 pour canaliser en direction dudit nid 21 (ou de chaque nid 21, le cas échéant) les porcelets qui viennent de naître, sur le plancher 10 et juste en avant du couloir 14. Ces moyens 38 sont constitués, dans cet exemple de réalisation, d'un couloir qui est prévu pour relier la partie 14a dudit couloir 14, qui est située dans le prolongement dudit plancher 10 et à l'arrière de celui-ci, et le nid 21 (ou chaque nid 21, le cas échéant), lorsque le tapis 12 est appliqué sur le caillebotis correspondant 19.

Comme on peut le voir à la Fig. 1, ce couloir 38 présente par exemple une forme de "L", dont la base 39 est prévue pour recouvrir au moins une zone de ladite partie 14a et dont la tige 40 est prévue pour recouvrir ledit caillebotis 19 à partir de ladite zone et jusqu'au bord proximal 21c dudit nid 21.

Dans l'exemple de la Fig. 1, la base 39 dudit couloir 38 en "L" recouvre la totalité de ladite partie 14a.

On notera que ladite base 39 pourrait en outre recouvrir une partie arrière 16a du caillebotis arrière 16 du plancher 10. Dans l'exemple de la Fig. 1, cette partie arrière 16a présente une forme de trapèze rectangle dont la petite base correspond à un côté transversal de ladite partie 14a. Dans ce cas, on comprend que la base 39 dudit couloir 38 présenterait une forme de trapèze rectangle.

De plus, le couloir 38 est délimité transversalement par des rebords 41 formés par des plis faisant saillie sur la face externe du tapis 12a, sur au moins une partie dudit "L". Ces rebords 41 sont prévus pour canaliser lesdits porcelets nouveaux-nés de la manière précitée, en procurant une sensation désagréable auxdits porcelets qui évolueraient à leur contact

Au contraire, la surface dudit couloir 38 qui est comprise entre lesdits rebords 41 est prévue pour procurer une sensation de confort aux porcelets, de telle sorte que ceux-ci puissent accéder rapidement au nid 21 juste après leur naissance pour se réchauffer à son contact, tout en étant incités à ne pas s'écarter dudit couloir 38.

On notera que le ou les tapis 12a, 12b selon la présente invention peuvent être constitués de tapis réalisés en une matière lavable et réutilisable, telle que du caoutchouc ou du plastique, ou bien en une matière jetable et éventuellement biodégradable.

On peut également utiliser une matière bio-fragmentable pour constituer le ou les tapis 12a, 12b, telle que de l'amidon de céréales, du pop-corn soufflé ou de la tourbe, de telle sorte que chaque tapis 12a, 12b se décompose progressivement en contrebas dans la fosse à lisier sous le piétinement croissant des porcelets. Dans ce cas, l'éleveur n'a pas à retirer le ou les tapis 12a, 12b de la case 1, quelques jours après la naissance des porcelets.

Ces tapis 12a et 12b sont destinés à recouvrir lesdits caillebotis 19 et 20 pour porcelets pendant les premiers jours de vie des porcelets, par exemple pendant cinq jours, et leur structure pleine présente l'avantage essentiel de procurer une sensation de confort aux jeunes porcelets qui les incite à s'y mouvoir pour aller téter.

De plus, cette structure pleine permet de supprimer, d'une part, les risques de blessure des jeunes porcelets au contraire des simples caillebotis de l'art antérieur et, d'autre part, les courants d'air néfastes pour la santé desdits porcelets.

On notera que la zone 22 du plancher 11 pour porcelets qui est prévue pour recevoir les déjections desdits porcelets incite ces derniers à l'utiliser à cet effet, de par sa situation contiguë à ladite paroi 6 et de par les courants d'air locaux résultant de la surface ajourée dans cette zone 22. On sait en effet que les jeunes porcelets affectionnent de faire leurs déjections le long d'un mur ou d'une cloison 6, et qu'ils se dirigeront instinctivement vers le tapis 12b du côté duquel se trouvent ladite paroi 6 et ladite zone 22 aérée en vue de faire leurs besoins.

A titre de variante, ledit arc de courbe 27 devient droit, parallèle au plancher de la truie, et cette zone comporte des protubérances 42 de section en dent de scie telles que représentées à la Fig. 2 bis. Une bande est également prévue en contre bas du gisoir 17 de la truie et de la zone munie desdites protubérances. Cette bande est munie de moyens antidérapants, par exemple avec un effet d'ondulation perpendiculaire au plancher de la truie, permettant de canaliser les pattes arrières des porcelets jusqu'aux starting-blocks. Cet arrangement est particulièrement remarquable dans le cas de porcelet de type "splay leg".

De plus, ledit couloir en L qui mène le porcelet au nid peut également être modifié. La base du L située à l'arrière de la cage de la truie comporte une bosse arrondie en forme de talus. Cette bosse a pour effet d'éloigner le porcelet du pied arrière de la cage. Dans cette variante, on remarque maintenant une réelle proéminence de part et d'autre de la zone truie.

Lorsqu'un porcelet chevauche l'une de ces bosses, il est dans une position inconfortable et non stable. Ces deux phénomènes conjugués incitent le porcelet à se positionner de nouveau à plat sur le tapis.

En revanche, le chemin qui allait de la base du L vers le nid à porcelet peut être enlevé.

Ainsi des trois évidements initialement prévus dans l'exemple de réalisation déjà décrit, il ne reste que celui destiné à la zone réservée à la truie.

L'évidement pour l'évacuation des déjections est supprimé comme celui qui épousait le contour de la zone appelée nid à porcelet. Le tapis recouvre maintenant ces deux zones.

## Revendications

1. Case de maternité (1) destinée à recevoir une femelle et ses petits, notamment une truie et ses porcelets, ladite case (1) comportant un plancher (10, 11) comprenant respectivement des caillebotis (15, 16; 19, 20) dont une première partie (10) et une seconde partie (11) sont respectivement prévues pour recevoir ladite femelle et lesdits petits, ladite seconde partie (11) comportant au moins une zone chauffée (21) destinée à recevoir les porcelets nouveau-nés, ledit plancher (10, 11) comportant au moins un tapis (12a, 12b) amovible reliant ladite zone chauffée (21) à ladite première partie de plancher (10) et dont le périmètre correspond à celui de la seconde partie de plancher (11), le tapis (12a, 12b) étant destiné à être utilisé pendant les premiers jours d'allaitement qui suivent la naissance de porcelets nouveau-nés, **caractérisée en ce que** le tapis (12a, 12b) comporte une zone (26) qui fait saillie sur sa surface externe et qui est prévue pour recouvrir le caillebotis destiné aux porcelets (19, 20) sensiblement à l'endroit de l'emplacement des tétines de la truie, lorsqu'elle repose par son flanc sur la première partie (10).

2. Case de maternité (1) selon la revendication 1, **caractérisée en ce que** ledit ou chaque tapis (12a, 12b) est contigu à un longeron (13) de ladite première partie de plancher (10) qui est prévu pour l'allaitement desdits petits par ladite femelle.

3. Case de maternité (1) selon la revendication 2, du type où ladite première partie de plancher (10) s'étend pratiquement d'une extrémité avant (2) à une extrémité arrière (3) de ladite case (1), et où ladite seconde partie de plancher (11) s'étend de part et d'autre de ladite première partie (10) et comporte au moins une zone (22) de type caillebotis pour l'évacuation des déjections, **caractérisée en ce que** ladite ou l'une au moins desdites zones (22) pour l'évacuation des déjections est prévue du côté de ladite première partie (10) qui ne comporte pas ladite ou chaque zone chauffée (21).

4. Case de maternité (1) selon la revendication 3, **caractérisée en ce que** ladite zone (22) pour l'évacuation des déjections est prévue contiguë à une paroi (6) du type mur ou cloison, à l'emplacement d'un bord latéral (5) de ladite case (1).

5. Case de maternité (1) selon la revendication 3 ou 4, **caractérisée en ce que** ladite zone (22) pour l'évacuation des déjections est prévue sensiblement à l'opposé de ladite ou chaque zone chauffée (21).

6. Case de maternité (1) selon une des revendications 3 à 5, **caractérisée en ce que** ladite zone (22) pour l'évacuation des déjections présente un périmètre sensiblement rectangulaire et une forme allongée.

7. Case de maternité (1) selon une des revendications 2 à 6, du type où ladite seconde partie de plancher (11) est prévue globalement en contrebas de ladite première partie de plancher (10), **caractérisée en ce que** la zone (26) qui fait saillie est prévue pour être contiguë audit longeron (13) de ladite première partie (10).

8. Case de maternité (1) selon la revendication 7, **caractérisée en ce que** ladite ou chaque zone saillante (26) est délimitée globalement, en projection plane sur la surface du tapis (12a, 12b) correspondant, par un périmètre (27) de forme linéaire ou en forme d'arc de courbe dont les deux extrémités (28 et 29) sont prévues contiguës audit longeron (13).

9. Case de maternité (1) selon la revendication 7 ou 8, **caractérisée en ce que**, lorsque le périmètre (27) est de forme linéaire, ladite ou chaque zone saillante (26) présente, dans un plan de coupe transversal qui est perpendiculaire audit longeron (13) et à partir dudit périmètre (27) de forme linéaire, une première portion comprenant des protubérances (42) de forme allongée puis d'une bande pourvue de moyens anti-dérapants situés en contrebas d'un gisoir de la truie.

10. Case de maternité (1) selon la revendication 9, **caractérisée en ce que** l'épaisseur dudit tapis (12a, 12b) au niveau d'une seconde portion (32) est prévue pour que celle-ci soit sensiblement à la même hauteur que ladite première partie de plancher (10).

11. Case de maternité (1) selon la revendication 9 ou 10, **caractérisée en ce qu'**elle incorpore une troisième portion (33) présentant une surface anti-dérapante.

12. Case de maternité (1) selon une des revendications 7 à 11, **caractérisée en ce que** ledit ou chaque tapis (12a et 12b) comporte une paire de zones (34 et 35) d'épaisseur minimale et de forme allongée, qui sont respectivement prévues pour se trouver en regard des pattes avant et arrière de la truie lors de chaque allaitement.

13. Case de maternité (1) selon une des revendications précédentes, **caractérisée en ce que** ledit plancher (10, 11) comporte des moyens (38) pour canaliser les petits nouveau-nés en direction de ladite ou de chaque zone chauffée (21).

14. Case de maternité (1) selon la revendication 13, **caractérisée en ce que** lesdits moyens (38) comportent un couloir formé sur ledit ou chaque tapis (12a, 12b) et qui est prévu pour relier l'arrière (14a) de ladite première partie de plancher (10) à ladite ou chaque zone chauffée (21).

15. Case de maternité (1) selon une des revendications 3 à 14, **caractérisée en ce que** ledit ou chaque tapis (12a, 12b) est prévu pour s'étendre sur la totalité de ladite seconde partie de plancher (11).

16. Case de maternité (1) selon une des revendications précédentes, **caractérisée en ce que** ledit ou chaque tapis (12a, 12b) est constitué d'un matériau biodégradable ou de l'amidon de céréales, du pop-corn soufflé ou de la tourbe ou pouvant être fragmenté par piétinement.

17. Tapis de sol (12a, 12b) destiné à constituer un revêtement amovible de caillebotis (19, 20) d'une partie de plancher (11) de case de maternité (1) pour des animaux nouveau-nés, notamment des porcelets, la case de maternité (1) comportant en outre une autre partie de plancher (10) prévue pour recevoir une femelle notamment une truie, **caractérisé en ce que** le tapis (12a, 12b) comporte une zone (26) qui fait saillie sur sa surface externe et qui est prévue pour recouvrir ledit caillebotis (19, 20) sensiblement à l'endroit de l'emplacement des tétines de la truie, lorsqu'elle repose par son flanc sur la partie de plancher (10).

18. Tapis de sol (12a, 12b) selon la revendication 17, **caractérisé en ce que** ladite ou chaque zone saillante (26) est délimitée globalement, en projection plane sur la surface du tapis (12a, 12b) correspondant, par un périmètre (27) de forme linéaire ou en forme d'arc de courbe .

19. Tapis de sol (12a, 12b) selon la revendication 18, **caractérisé en ce que** l'épaisseur dudit ou de chaque tapis (12a, 12b) au niveau d'une seconde portion (32) est prévue maximale pour ledit tapis (12a, 12b).

20. Tapis de sol (12, 12a) selon la revendication 17, **caractérisé en ce que**, lorsque le périmètre (27) est de forme linéaire, ladite ou chaque zone saillante (26) présente, dans un plan de coupe transversal qui est perpendiculaire audit longeron (13) et à partir dudit périmètre de forme linéaire, une première portion comprenant des protubérances (42) de forme allongée puis d'une bande pourvue de moyens anti-dérapants situés en contrebas dudit gisoir de la truie.

21. Tapis de sol (12a, 12b) selon la revendication 20, **caractérisé en ce que**, lorsque le périmètre (27) est en forme d'arc de courbe, il incorpore une troisième portion (33) présentant une surface anti-dérapante.

22. Tapis de sol (12a et 12b) selon une des revendications 17 à 21, **caractérisé en ce que** ledit ou chaque tapis (12a et 12b) comporte une paire de zones (34 et 35) d'épaisseur minimale et de forme allongée, qui sont respectivement prévues pour se trouver en regard des pattes avant et arrière de ladite mère lors de chaque allaitement.

23. Tapis de sol (12a, 12b) selon une des revendications 17 à 22, **caractérisé en ce qu'**il est constitué d'un matériau biodégradable de l'amidon de céréales, du pop-corn soufflé ou de la tourbe ou pouvant être fragmenté par piétinement.

## Claims

1. Nursery unit (1) intended to accommodate a female and her young, more especially a sow and her piglets, said unit (1) including a floor (10, 11) respectively comprising gratings (15, 16; 19, 20), a first part (10) of which and a second part (11) of which are respectively provided to accommodate said female and said young, said second part (11) including at least one heated area (21) intended to accommodate the newborn piglets, said floor (10, 11) including at least one detachable mat (12a, 12b), which connects said heated area (21) to said first floor part (10), and the perimeter of which corresponds to that of the second floor part (11), the mat (12a, 12b) being intended to be used during the first days of suckling which follow the birth of newborn piglets, **characterised in that** the mat (12a, 12b) includes an area (26) which projects over the external surface of said mat and which is provided to cover the grating intended for the piglets (19, 20) substantially at the location where the teats of the sow are positioned when she is resting on her side on the first part (10).

2. Nursery unit (1) according to claim 1, **characterised in that** said or each mat (12a, 12b) is adjacent to a bar (13) of said first floor part (10), which bar is provided for the suckling of said young by said female.

3. Nursery unit (1) according to claim 2, of the type where said first floor part (10) extends practically from a front end (2) to a rear end (3) of said unit (1), and where said second floor part (11) extends on each side of said first part (10) and includes at least one area (22) of the grating type for the removal of bowel evacuations, **characterised in that** said area or at least one of said areas (22) for the removal of bowel evacuations is provided on the side of said first part (10) which does not include said or each heated area (21).

4. Nursery unit (1) according to claim 3, **characterised in that** said area (22) for the removal of bowel evacuations is provided adjacent to a divider (6) of the wall or partition type, at the position of a lateral edge (5) of said unit (1).

5. Nursery unit (1) according to claim 3 or 4, **characterised in that** said area (22) for the removal of bowel evacuations is provided substantially opposite said or each heated area (21).

6. Nursery unit (1) according to one of claims 3 to 5, **characterised in that** said area (22) for the removal of bowel evacuations has a substantially rectangular perimeter and an elongate shape.

7. Nursery unit (1) according to one of claims 2 to 6, of the type where said second floor part (11) is provided on the whole below said first floor part (10), **characterised in that** the area (26) which projects is provided to be adjacent to said bar (13) of said first part (10).

8. Nursery unit (1) according to claim 7, **characterised in that** said or each projecting area (26) is defined on the whole, in planar projection on the surface of the corresponding mat (12a, 12b), by a perimeter (27) of linear shape or in arcuate form, the two ends (28 and 29) of which are provided adjacent to said bar (13).

9. Nursery unit (1) according to claim 7 or 8, **characterised in that**, when the perimeter (27) is of linear shape, said or each projecting area (26) has, in a cross-sectional plane which is perpendicular to said bar (13) and starts from said perimeter (27) of linear shape, a first portion including protuberances (42) of elongate form, then a strip provided with non-slip means situated below a bed for the sow.

10. Nursery unit (1) according to claim 9, **characterised in that** the thickness of said mat (12a, 12b) at the level of a second portion (32) is provided so that the latter is substantially at the same height as said first floor part (10).

11. Nursery unit (1) according to claim 9 or 10, **characterised in that** it incorporates a third portion (33) which has a non-slip surface.

12. Nursery unit (1) according to one of claims 7 to 11, **characterised in that** said or each mat (12a and 12b) includes a pair of areas (34 and 35), of minimum thickness and elongate form, which are respectively provided so as to be situated opposite the front and rear legs of the sow during each suckling period.

13. Nursery unit (1) according to one of the preceding claims, **characterised in that** said floor (10, 11) includes means (38) for channelling the newborn young in the direction of said or each heated area (21).

14. Nursery unit (1) according to claim 13, **characterised in that** said means (38) include a corridor which is formed on said or each mat (12a, 12b) and is provided to connect the rear (14a) of said first floor part (10) to said or each heated area (21).

15. Nursery unit (1) according to one of claims 3 to 14, **characterised in that** said or each mat (12a, 12b) is provided so as to extend over the whole of said second floor part (11).

16. Nursery unit (1) according to one of the preceding claims, **characterised in that** said or each mat (12a, 12b) is formed from a biodegradable material or cereal starch, puffed-up popcorn or peat, or it can be broken-up as a result of being trampled on.

17. Ground mat (12a, 12b) intended to form a detachable covering for gratings (19, 20) of a floor part (11) of a nursery unit (1) for newborn animals, more especially piglets, the nursery unit (1) also including another floor part (10) which is provided to accommodate a female, more especially a sow, **characterised in that** the mat (12a, 12b) includes an area (26) which projects over the external surface of said mat and which is provided to accommodate said grating (19, 20) substantially at the location where the teats of the sow are positioned when she is lying on her side on the floor part (10).

18. Ground mat (12a, 12b) according to claim 17, **characterised in that** said or each projecting area (26) is defined on the whole, in planar projection on the surface of the corresponding mat (12a, 12b), by a perimeter (27) of linear shape or in arcuate form.

19. Ground mat (12a, 12b) according to claim 18, **characterised in that** the thickness of said or each mat (12a, 12b) at the level of a second portion (32) is the maximum provided for said mat (12a, 12b).

20. Ground mat (12a, 12b) according to claim 17, **characterised in that**, when the perimeter (27) is of linear shape, said or each projecting area (26) has, in a cross-sectional plane which is perpendicular to said bar (13) and starts from said perimeter (27) of linear shape, a first portion including protuberances (42) of elongate form, then a strip provided with non-slip means situated below said bed for the sow.

21. Ground mat (12a, 12b) according to claim 20, **characterised in that**, when the perimeter (27) is in arcuate form, it incorporates a third portion (33) which has a non-slip surface.

22. Ground mat (12a, 12b) according to one of claims 17 to 21, **characterised in that** said or each mat (12a and 12b) includes a pair of areas (34 and 35) of minimum thickness and elongate form, which are respectively provided so as to be situated opposite the front and rear legs of said mother during each suckling period.

23. Ground mat (12a, 12b) according to one of claims 17 to 22, **characterised in that** it is formed from a biodegradable material of cereal starch, puffed-up popcorn or peat, or it can be broken-up as a result of being trampled on.

## Patentansprüche

1. Mutterschaftsabteil (1), das dazu bestimmt ist, ein Weibchen und seine Jungen aufzunehmen, insbesondere ein Mutterschwein und seine Ferkel, welches Abteil (1) einen Boden (10, 11) umfasst, der Gitterroste (15, 16,; 19, 20) umfasst, deren erster (10) und zweiter Teil (11) jeweils dazu vorgesehen sind, das Weibchen bzw. die Jungen aufzunehmen, welcher zweite Teil (11) mindestens einen beheizten Bereich (21) umfaßt, der dazu bestimmt ist, die neugeborenen Ferkel aufzunehmen, welcher Boden (10, 11) mindestens eine abnehmbare Bodenmatte (12a, 12b) umfasst, die den beheizten Bereich (21) mit dem ersten Teil des Bodens (10) verbindet und deren Umfang jenem des zweiten Bodenteils (11) entspricht, welche Matte (12a, 12b) dazu vorgesehen ist, während der ersten Tage des Säugens nach der Geburt der neugeborenen Ferkel verwendet zu werden, **dadurch gekennzeichnet, daß** die Matte (12a, 12b) einen Bereich (26) umfasst, der auf ihrer Außenfläche vorspringt und dazu vorgesehen ist, den für die Ferkel bestimmten Gitterrost (19, 20) im wesentlichen an der Stelle aufzunehmen, an der sich die Zitzen des Mutterschweins befinden, wenn dieses auf dem ersten Teil (10) auf der Seite liegt.

2. Mutterschaftsabteil (1) nach Anspruch 1, **dadurch gekennzeichnet, daß** die bzw. jede Matte (12a, 12b) an einen Längsträger (13) des ersten Bodenteils (10) angrenzt, der zum Säugen der Jungen durch das Weibchen vorgesehen ist.

3. Mutterschaftsabteil (1) nach Anspruch 2, **dadurch gekennzeichnet, daß** sich der erste Bodenteil (10) praktisch von einem vorderen Ende (2) bis zu einem hinteren Ende (3) des Abteils (1) erstreckt, und daß sich der zweite Bodenteil (11) beiderseits des ersten Teils (10) erstreckt und mindestens einen Gitterrostbereich (22) zur Beseitigung der Exkremente umfasst, und daß der oder zumindest einer der Bereiche (22) zur Beseitigung der Exkremente auf der Seite des ersten Teils (10) vorgesehen ist, der den bzw. jeden beheizten Bereich (21) nicht umfasst.

4. Mutterschaftsabteil (1) nach Anspruch 3, **dadurch gekennzeichnet, daß** der Bereich (22) zur Beseitigung der Exkremente angrenzend an eine Wand (6) des Typs Mauer oder Trennwand an der Steile eines Seitenrandes (5) des Abteils (1) vorgesehen ist.

5. Mutterschaftsabteil (1) nach Anspruch 3 oder 4, **dadurch gekennzeichnet, daß** der Bereich (22) zur Beseitigung der Exkremente im wesentlichen gegenüber dem bzw. jedem beheizten Bereich (21) vorgesehen ist.

6. Mutterschaftsabteil (1) nach einem der Ansprüche 3 bis 5, **dadurch gekennzeichnet, daß** der Bereich (22) zur Beseitigung der Exkremente einen im wesentlichen rechteckigen Umfang and eine längliche Form aufweist.

7. Mutterschaftsabteil (1) nach einem der Ansprüche 2 bis 6, derart beschaffen, daß der zweite Bodenteil (11) global unter dem ersten Bodenteil (10) vorgesehen ist, **dadurch gekennzeichnet, daß** der vorspringende Bereich (26) dazu vorgesehen ist, an den Längsträger (13) des ersten Teils (10) anzugrenzen.

8. Mutterschaftsabteil (1) nach Anspruch 7, **dadurch gekennzeichnet, daß** der bzw. jeder vorspringende Bereich (26) global in ebener Projektion auf die Oberfläche der entsprechenden Matte (12a, 12b) durch einen Umfang (27) linearer Form oder in Form eines Kurvenbogens begrenzt ist, dessen beiden Enden (28 und 29) an den Längsträger (13) angrenzend vorgesehen sind.

9. Mutterschaftsabteil (1) nach Anspruch 7 oder 8, **dadurch gekennzeichnet, daß**, wenn der Umfang (27) lineare Form hat, der bzw. jeder vorspringende Bereich (26) in einer Querschnittebene, die auf dem Längsträger (13) senkrecht steht, and ausgehend von dem Umfang (27) linearer Form einen ersten Abschnitt aufweist, der Ausstülpungen (42) länglicher Form und sodann eines Bandes aufweist, das mit Gleitschutzmitteln versehen ist, die unterhalb eines Säugeplatzes des Mutterschweins vorgesehen sind.

10. Mutterschaftsabteil (1) nach Anspruch 9, **dadurch gekennzeichnet, daß** die Dicke der Matte (12a, 12b) auf Höhe des zweiten Abschnittes (32) derart vorgesehen ist, daß sich dieser im wesentlichen auf derselben Höhe wie der erste Teil des Bodens (10) befindet.

11. Mutterschaftsabteil (1) nach Anspruch 9 oder 10, **dadurch gekennzeichnet, daß** es einen dritten Abschnitt (33) umfasst, der eine Gleitschutzfläche aufweist.

12. Mutterschaftsabteil (1) nach einem der Ansprüche 7 bis 11, **dadurch gekennzeichnet, daß** die bzw. jede Matte (12a and 12b) ein Paar von Bereichen (34 und 35) minimaler Dicke und länglicher Form umfasst, die jeweils dazu vorgesehen sind, sich gegenüber den Vorder- und Hinterfüßen des Mutterschweins bei jedem Säugen zu befinden.

13. Mutterschaftsabteil (1) nach einem der vorhergehenden Ansprüche, **dadurch gekennzeichnet, daß** der Boden (10, 11) Mittel (38) umfasst, um die neugeborenen Jungen in Richtung des bzw. jedes erhitzten Bereichs (21) zu lenken.

14. Mutterschaftsabteil (1) nach Anspruch 13, **dadurch gekennzeichnet, daß** die Mittel (38) einen Gang umfassen, der auf der bzw. jeder Matte (12a, 12b) ausgebildet und dazu vorgesehen ist, den hinteren Bereich (14a) des ersten Bodenteils (10) mit dem bzw. jedem beheizten Bereich (21) zu verbinden.

15. Mutterschaftsabteil (1) noch einem der Ansprüche 3 bis 14, **dadurch gekennzeichnet, daß** die bzw. jede Matte (12a, 12b) dazu vorgesehen ist, sich auf dem gesamten zweiten Bodenteil (11) zu erstrecken.

16. Mutterschaftsabteil (1) noch einem der vorhergehenden Ansprüche, **dadurch gekennzeichnet, daß** die bzw. jede Matte (12a, 12b) aus einem biologisch abbaubaren Material oder Getreidestärke, aus geschäumtem Puffmais oder Torf gebildet ist oder durch Niedertrampeln zerkleinert werden kann.

17. Bodenmatte (12a, 12b), die dazu bestimmt ist, eine abnehmbare Verkleidung für den Gitterrost (19, 20) eines Bodenteils (11) eines Mutterschaftsabteils (1) für neugeborene Tiere, insbesondere Ferkel, zu bilden, wobei das Mutterschaftsabteil (1) ferner einen weiteren Bodenteil (10) umfasst, der dazu vorgesehen ist, ein Weibchen, insbesondere ein Mutterschwein, aufzunehmen, **dadurch gekennzeichnet, daß** die Matte (12a, 12b) einen Bereich (26) umfasst, der auf ihrer Außenfläche vorspringt und dazu vorgesehen ist, den Gitterrost (19, 20) im wesentlichen an der Stelle, an der sich die Zitzen des Mutterschweins befinden, abzudecken, wenn es mit seiner Seite auf dem Bodenteil (10) liegt.

18. Bodenmatte (12a, 12b) noch Anspruch 17, **dadurch gekennzelchnet,** daß der bzw. jeder vorspringende Bereich (26) global in ebener Projektion auf die Fläche der entsprechenden Matte (12a, 12b) durch einen Umfang (27) linearer Form oder in Form eines Kurvenbogens begrenzt ist.

19. Bodenmatte (12a, 12b) nach Anspruch 18, **dadurch gekennzeichnet, daß** die Dicke der bzw. jeder Matte (12a, 12b) auf Höhe eines zweiten Abschnittes (32) für die Matte (12a, 12b) maximal vorgesehen ist.

20. Bodenmatte (12, 12a) noch Anspruch 17, **dadurch gekennzeichnet, daß**, wenn der Umfang (27) lineare Form aufweist, der bzw. jeder vorspringende Bereich (26) in einer Querschnittebene, die auf den Längsträger (13) senkrecht steht und ausgehend vom Umfang linearer Form einen ersten Abschnitt aufweist, der Ausstülpungen (42) länglicher Form und sodann eines Bandes, das mit Gleitschutrmitteln versehen ist, die sich unterhalb des Säugeplatzes des Mutterschweins befinden, umfasst.

21. Bodenmatte (12a, 12b) nach Anspruch 20, **dadurch gekennzeichnet, daß**, wenn der Umfang (27) die Form eines Kurvenbogens aufweist, diese einen dritten Abschnitt (33) umfasst, der eine Gleitschutzfläche besitzt.

22. Bodenmatte (12a und 12b) nach einem der Ansprüche 17 bis 21, **dadurch gekennzeichnet, daß** die bzw. jede Matte (12a und 12b) ein Paar von Bereichen (34 und 35) minimaler Dicke und länglicher Form umfasst, die jeweils dazu vorgesehen sind, sich gegenüber den Vorder- und Hinterfüßen der Mutter bei jedem Säugen zu befinden.

23. Bodenmatte (12a, 12b) nach einem der Ansprüche 17 bis 22, **dadurch gekennzeichnet, daß** sie aus einem biologisch abbaubaren Material, Getreidestärke, geschäumtem Puffmais oder Torf gebildet ist oder durch Niedertrampeln zerkleinert werden kann.
